# EUROPEAN PATENT APPLICATION

(11) **EP 2 248 414 A1**
(43) Date of publication of application: **10.11.2010**
(21) Application number: 10160675.4
(22) Date of filing: 22.04.2010
(51) Int. Cl.: A01G 25/02

(54) **Drip emitter and methods of assembly and mounting**

(30) Priority: 06.05.2009 US 436394
(71) Applicant: Rain Bird Corporation, Azusa, CA 91702 (US)
(72) Inventor: Mattlin, Jeffrey L., Pasadena, CA 91104 (US); Zakarian, Berj, Redlands, CA 92373 (US)
(74) Representative: Lechner, Armin Anton

(57) **Abstract**

A drip emitter (10), and methods of assembly and mounting, are provided for delivering irrigation water from a supply tube (100) to an emitter outlet (22) at a reduced and relatively constant flow rate. Water enters the emitter through a first inlet (16) and proceeds into a first chamber. When the water pressure is above a predetermined level, a one-directional valve (40) opens to allow fluid flow past the first chamber, through a pressure-reducing flow channel (38), and through an emitter outlet (22). A second inlet (18) is used to compensate for water pressure differences in the supply tube to maintain output flow at a relatively constant rate. Water enters the second inlet and presses a flexible diaphragm (36) toward a water metering surface (42) to provide pressure-dependent control of the output flow. Copper (64) is located near the emitter outlet to prevent plant root intrusion.

## Description

### FIELD

The present invention relates to irrigation drip emitters, and more particularly, to multiple irrigation drip emitters mounted to a supply tube to form an irrigation system.

### BACKGROUND

Drip emitters are commonly used in irrigation systems to convert water flowing through a supply tube at a relatively high flow rate to a relatively low flow rate at the outlet of each emitter. Each drip emitter generally includes a housing defining a flow path that reduces high pressure water entering the drip emitter into relatively low pressure water exiting the drip emitter. Multiple drip emitters are commonly mounted on the inside or outside of a water supply tube. In one type of system, a large number of drip emitters are mounted at regular and predetermined intervals along the length of the supply tube to distribute water at precise points to surrounding land and vegetation.

Subsurface drip emitters provide numerous advantages over drip emitters located and installed above ground. First, they limit water loss due to runoff and evaporation and thereby provide significant savings in water consumption. Water may also be used more economically by directing it at precise locations of the root systems of plants or other desired subsurface locations.

Second, subsurface drip emitters provide convenience. They allow the user to irrigate the surrounding terrain at any time of day or night without restriction. For example, such emitters may be used to water park or school grounds at any desired time. Drip emitters located above ground, on the other hand, may be undesirable at parks and school grounds during daytime hours when children or other individuals are present.

Third, subsurface emitters are not easily vandalized, given their installation in a relatively inaccessible location, *i.e.,* underground. Thus, use of such subsurface emitters results in reduced costs associated with replacing vandalized equipment and with monitoring for the occurrence of such vandalism. For instance, use of subsurface emitters may lessen the costs associated with maintenance of publicly accessible areas, such as parks, school grounds, and landscaping around commercial buildings and parking lots.

Fourth, the use of subsurface drip emitters can prevent the distribution of water to undesired terrain, such as roadways and walkways. More specifically, the use of subsurface drip emitters prevents undesirable "overspray." In contrast, above-ground emitters often generate overspray that disturbs vehicles and/or pedestrians. The above-identified advantages are only illustrative; other advantages exist in connection with the use of subsurface drip emitters.

Although some advantages of subsurface emitters are described above, it would be desirable to provide an improved drip emitter design that can be used in both subsurface and above ground applications. For both applications, there is a need to provide for a relatively constant water output from each of the emitters in the irrigation system. More specifically, it is desirable to provide pressure compensation so as to ensure that the flow rate of the first emitter in the system is substantially the same as the last emitter in the system. Without such flow rate compensation, the last emitter in a series of emitters will experience a greater pressure loss than the first. Such pressure loss results in the inefficient and wasteful use of water.

There is also a need in the irrigation industry to keep drip emitters for both subsurface and above ground applications from becoming obstructed, which results in insufficient water distribution and potential plant death. Obstruction of an emitter may result from the introduction of grit, debris, or other particulate matter from debris entering the emitter through the supply tube. It is therefore desirable to have an inlet that is small enough to filter out particles that might otherwise clog flow passages in the body of the emitter. The flow through area of the inlet, however, must also be large enough to allow proper functioning of the drip emitter.

Obstruction of an emitter may also result from the introduction of particulate matter entering the emitter from the terrain being irrigated, *i.e.,* "back siphoning" into the emitter through the outlet. Such obstruction of an emitter may result in severe, and in some cases complete, flow restriction, potentially preventing the emitter from operating entirely. Many irrigation systems depend on the operation of each specifically situated emitter for sufficient water coverage to maintain healthy grass, crop, or other plant growth. Accordingly, there is a need to prevent subsurface drip emitters from becoming obstructed by back siphoning.

Further, there is a need to prevent obstruction of an emitter outlet by plant roots intruding into the outlet. Some conventional methods of preventing root intrusion, and the accumulation of microscopic organisms, involve the use of herbicides, fungicides, algaecides, biocides, etc. For example, in some instances, herbicides have been released indiscriminately into the soil in an attempt to prevent plant root intrusion. Alternatively, herbicides have been mixed with the plastic materials from which the irrigation supply tube is made. Also, such chemicals have sometimes been mixed in dilute quantities with the irrigation water distributed by the tube.

These conventional methods are often not directed specifically to the emitters and emitter outlets and, therefore, may be of only limited effectiveness in preventing root intrusion. In addition, such conventional methods generally target plants and the environment indiscriminately and may have serious adverse effects on the health of plants, as well as the broader environment as a whole. Accordingly, there is a need for a mechanism that is more targeted and more environmentally friendly.

Drip emitters are commonly formed of multiple housing components and a flexible diaphragm. Even slight misalignment of these housing components and diaphragm during assembly may result in a malfunctioning drip emitter. Thus, in addition to the above needs, it would be desirable to improve the mounting and alignment of the housing components and diaphragm during assembly. It would also be desirable to use a snap-fit manner of attaching the two housing pieces to reduce the cost of manufacturing the emitter and to improve assembly of the emitter.

### SUMMARY OF THE INVENTION

A first aspect of the invention relates to an irrigation drip emitter comprising:
a housing including a first housing portion and a second housing portion, the first housing portion defining an inlet and the second housing portion defining a pressure reducing flow channel and a first outlet;
a diaphragm mounted between the first housing portion and the second housing portion and forming in part a valve having an open position and a closed position; and
a first flow path from the inlet through the valve when in the open position, through the pressure reducing flow channel, and through the first outlet; and
   wherein at least one of the first and second housing portions includes one or more members for substantially fixed alignment of the diaphragm to limit movement of the diaphragm.

Preferably the irrigation drip emitter comprising one or more tabs formed in one of the housing portions to define a predetermined distance corresponding to a width of the diaphragm, the one or more tabs aligning the diaphragm to resist movement of the diaphragm in at least a first direction.

Preferably the irrigation drip emitter comprising one or more stops formed on one of the housing portions to define a predetermined distance corresponding to a length of the diaphragm, the one or more stops aligning the diaphragm to resist movement of the diaphragm in at least a direction perpendicular to the first direction.

In a preferred embodiment of the irrigation drip emitter the first housing portion has a first curved surface and the second housing portion has a second curved surface, the first and second curved surfaces having substantially the same radius of curvature for mounting the first and second housing portions to an inside wall of a supply tube.

Preferably the irrigation drip emitter comprising a post projecting from the second housing portion and adapted for engagement with an inside wall of a supply tube to form a second outlet.

In a preferred embodiment of the irrigation drip emitter the post has an I-shaped cross-section that is oriented transverse to a longitudinal dimension of the drip emitter to define at least in part two outlet openings of the second outlet.

Preferably the irrigation drip emitter of comprising a second flow path into a pressure compensation chamber defined by the first housing portion and the diaphragm.

Preferably the irrigation drip emitter comprising a metering chamber defined by the second housing portion and the diaphragm, wherein the diaphragm is deflected into the metering chamber in response to pressure exerted against the diaphragm by fluid flowing into the pressure compensation chamber.

In a preferred embodiment of the irrigation drip emitter the second housing portion includes a grooved surface that defines a portion of the metering chamber and wherein the diaphragm is deflected toward the grooved surface to regulate fluid flowing through the first outlet in response to fluid pressure in the pressure compensation chamber.

In a preferred embodiment of the irrigation drip emitter the pressure reducing flow channel comprises a plurality of baffles to cause directional changes in fluid flow.

Preferably the irrigation drip emitter comprising copper located downstream of the first outlet.

In a preferred embodiment of the irrigation drip emitter the copper is in the form of a copper member mounted to the second housing portion.

In a preferred embodiment of the irrigation drip emitter the copper is in the form of a copper layer applied to the second housing portion.

In a preferred embodiment of the irrigation drip emitter the copper is located in a chamber defined at least in part by the second housing portion, the chamber forming a copper ion bath for fluid flowing along the first flow path.

A further independent aspect of the invention relates to an irrigation drip emitter comprising:
a housing including a first housing portion and a second housing portion, the first housing portion defining an inlet and the second housing portion defining a pressure reducing flow channel and a first outlet;
a diaphragm mounted between the first housing portion and the second housing portion and forming in part a valve having an open position and a closed position; and
a first flow path from the inlet through the valve when in the open position, through the pressure reducing flow channel, and through the first outlet;
   wherein the first housing portion comprises a valve surface that is engaged by the valve when in the closed position and wherein the inlet comprises one or more inlet openings spaced substantially outside an outer perimeter of the valve surface such that the valve cannot overlap with the plurality of openings.

In a preferred embodiment of the irrigation drip emitter the one or more inlet openings comprise a plurality of inlet openings sized to filter particulate matter exceeding a predetermined size from entering the drip emitter.

In a preferred embodiment of the irrigation drip emitter the inlet openings are elongated inlet openings.

In a preferred embodiment of the irrigation drip emitter the inlet openings are arcuate.

In a preferred embodiment of the irrigation drip emitter the inlet openings are disposed in a ring.

In a preferred embodiment of the irrigation drip emitter the valve comprises a first portion responsive to pressure to activate the valve between the open position and the closed position and a second portion defining an opening in the diaphragm, the second portion engaging the valve surface to provide an even seal when in the closed position when fluid pressure is below a predetermined level.

In a preferred embodiment of the irrigation drip emitter the first portion comprises an annular portion extending outward beyond the second portion and the second portion comprises a tubular portion.

In a preferred embodiment of the irrigation drip emitter the second housing portion defines a plurality of pins aligned with the diaphragm valve, the plurality of pins spaced to evenly support the valve when in the open position and to prevent the valve from becoming fixed in the open position.

Preferably the irrigation drip comprising copper located downstream of the first outlet.

In a preferred embodiment of the irrigation drip emitter the copper is in the form of a copper member mounted to the second housing portion.

In a preferred embodiment of the irrigation drip emitter the copper is in the form of a copper layer applied to the second housing portion.

In a preferred embodiment of the irrigation drip emitter the copper is located in a chamber defined at least in part by the second housing portion, the chamber forming a copper ion bath for fluid flowing along the first flow path.

A further independent aspect of the invention relates to an irrigation drip emitter comprising:
a housing including a first housing portion and a second housing portion, the first housing portion defining an inlet and the second housing portion defining a pressure reducing flow channel and a first outlet;
a diaphragm mounted between the first housing portion and the second housing portion and forming in part a valve having an open position and a closed position;
a first flow path from the inlet through the valve when in the open position, through the pressure reducing flow channel, and through the first outlet; and
   wherein the first and second housing portions include a plurality of spaced interlocking engagement members for alignment and mounting of the first housing portion to the second housing portion to resist detachment of the first housing portion from the second housing portion.

In a preferred embodiment of the irrigation drip emitter the engagement members comprise one or more barbs formed in one of the housing portions that engage one or more pockets formed in the other of the housing portions for snap fit engagement of the first housing portion to the second housing portion.

In a preferred embodiment of the irrigation drip emitter the engagement members further comprise one or more posts formed in one of the housing portions that engage one or more slots formed in the other of the housing portions for alignment of the first and second housing portions.

In a preferred embodiment of the irrigation drip emitter the one or more barbs and posts are spaced at predetermined intervals along the first housing portion and wherein the one or more barbs alternate with the one or more posts.

A further aspect of the invention relates to a method of assembling an irrigation drip emitter, the emitter having a first housing portion, a second housing portion, and a diaphragm, the method comprising:
forming one or more tabs in one of the housing portions to define a first predetermined distance corresponding to a first dimension of the diaphragm;
forming one or more stops in one of the housing portions to define a second predetermined distance corresponding to a second dimension of the diaphragm;
locating the diaphragm to engage the one or more tabs to limit movement of the diaphragm in a first direction and to align the diaphragm with the first and second housing portions; and
locating the diaphragm to engage the one or more stops to limit movement of the diaphragm in a second direction transverse to the first direction and to align the diaphragm with the first and second housing portions.

Preferably the method further comprising:
forming a plurality of barbs in one of the housing portions at predetermined intervals;
forming a plurality of pockets in the other of the housing portions at the predetermined intervals, each pocket configured for reception of one barb;
locating the diaphragm between the first and second housing portions; and interlocking each barb with the corresponding pocket.

Preferably the method further comprising applying copper to at least a portion of the emitter.

A further independent aspect of the invention relates to a method of mounting an irrigation drip emitter to the inner surface of a fluid supply tube, the method comprising:
extruding a tube;
providing a drip emitter having a projection;
orienting the drip emitter such that a longitudinal dimension of the emitter is aligned with the direction of extrusion of the tube;
feeding the drip emitter into engagement with the inner surface of the tube such that the projection creates an outwardly projecting bulge in the tube;
heat bonding the drip emitter to the inner surface of the tube; and
blindly cutting the bulge and projection to form one or more outlet openings in the tube.

In a preferred embodiment of the method the projection of the drip emitter has an I-shaped cross-section that is oriented transverse to the longitudinal dimension of the drip emitter.

### BRIEF DESCRIPTION OF THE DRAWINGS

FIG. 1 is a top perspective view of an assembled drip emitter embodying features of the present invention;

FIG. 2 is a bottom perspective view of the drip emitter of FIG. 1;

FIG. 3 is a top exploded perspective view of the drip emitter of FIG. 1;

FIG. 4 is a bottom exploded perspective view of the drip emitter of FIG. 1;

FIG. 5 is a cross-sectional view of the drip emitter of FIG. 1 taken along line 5-5 of FIG. 1;

FIG. 6 is a top plan view of the upper housing of the drip emitter of FIG. 1;

FIG. 7 is a bottom plan view of the upper housing of the drip emitter of FIG. 1;

FIG. 8 is a bottom perspective view of the upper housing of the drip emitter of FIG. 1;

FIG. 9 is a top plan view of the lower housing of the drip emitter of FIG. 1;

FIG. 10 is a bottom perspective view of the lower housing of the drip emitter of FIG. 1;

FIG. 11 is a cross-sectional view of the drip emitter of FIG. 1 showing the emitter mounted in an irrigation supply tube; and

FIG. 12 is a perspective view of the chimney and supply tube outlet of the mounted drip emitter of FIG. 11 as seen from outside the supply tube.

### DESCRIPTION OF THE PREFERRED EMBODIMENTS

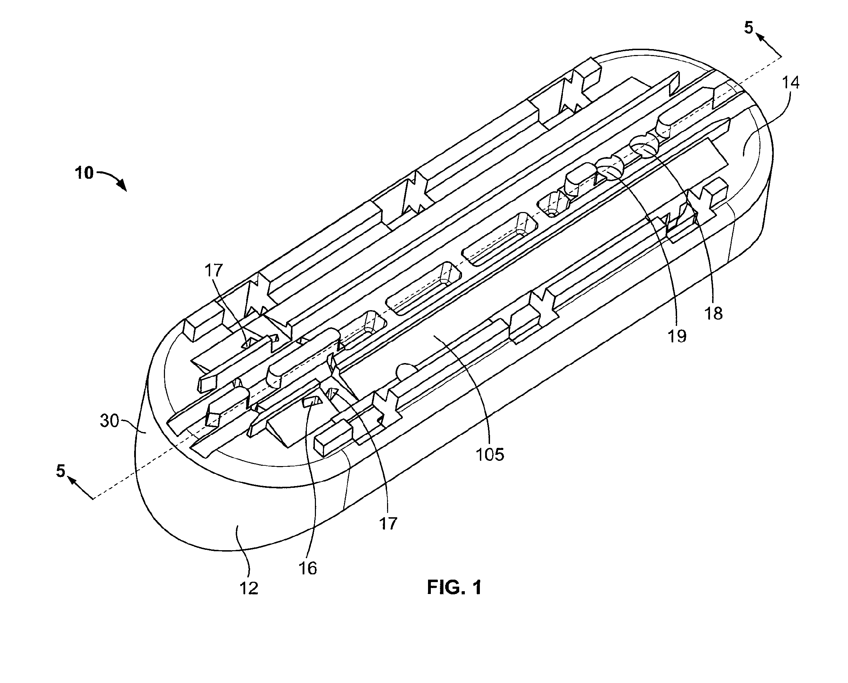

As shown in FIGS. 1-5, a drip irrigation emitter 10 is provided for distributing water from a supply conduit at a low flow rate. The emitter 10 makes use of a pressure-reducing flow channel 38 that produces a significant reduction in pressure between water flowing in the supply conduit and the emitter outlet 22. The emitter 10 preferably includes a first inlet 16 for allowing water to flow through the body of the emitter 10 to the emitter outlet 22 and a second inlet 18 for allowing water to accumulate in a pressure compensation chamber 62 to further regulate fluid flow based on the amount of water pressure in the supply conduit.

As described further below, the drip emitter 10 preferably includes one or more of the following features: (1) a first inlet 16 made of a plurality of narrow, circumferentially-arranged slits 17 in the housing 12 spaced relatively distant from valve 40 to provide abundant tolerance for misalignment of the first inlet 16 with valve 40; (2) sealing engagement of the valve 40 with a flat surface 13 on the interior of the housing 12 to provide plenty of tolerance for misalignment of the check valve 40 with the housing 12; (3) pins 45 located on the interior of the housing 12 and oriented to support the valve 40 and to decrease the occurrence of the valve 40 becoming improperly fixed in an open position; (4) orientation of a chimney 26 to improve fluid flow out of the supply tube regardless of variations in chimney cutting during manufacturing; and (5) barbs 74 on one housing piece that engage corresponding pockets 76 on a second housing piece to fasten the housing pieces together (and additional structural features for alignment of the housing pieces and a diaphragm 36), thereby reducing the cost of manufacturing the emitter 10 and allowing more secure mounting of the emitter 10 to the supply conduit.

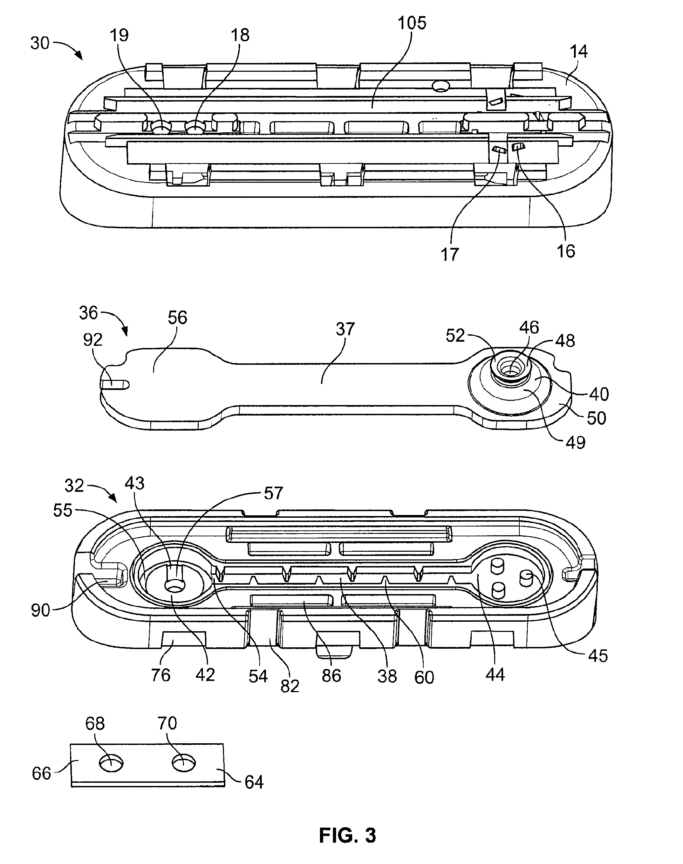

As shown in FIGS. 3-4, the emitter 10 preferably includes a two-piece housing 12, *i.e.,* an upper housing 30 and a lower housing 32, which sandwiches a diaphragm 36. The diaphragm 36 is generally planar and defines the valve 40 beneath the first inlet 16. The valve 40 opens and permits water flow between the first inlet 16 and the emitter outlet 22 when the supply water pressure is above a predetermined minimum level. The valve 40, however, closes off the flow path through the emitter 10 when the water pressure falls below the predetermined minimum level, as may occur when an irrigation cycle is completed.

The upper housing 30 preferably includes the first and second inlets 16 and 18 in its top 14. Fluid flows through inlet openings, preferably in the form of elongated openings, or slits 17, that constitute the first inlet 16 and through the body of the emitter 10 to the emitter outlet 22. More specifically, water flows through the inlet slits 17 and through an opening 46 in the diaphragm 36 (which forms part of the valve 40, as described further below) and through the rest of the emitter body. The inlet slits 17 are preferably small enough to filter out debris that might block fluid flow through the interior of the emitter 10.

A significant concern with the positioning of the slits 17 is misalignment of the first inlet 16 with respect to the opening 46 of the valve 40 in the diaphragm 36. Without careful alignment, the slits 17 may be spaced too close to the opening 46 in the diaphragm 36 because of variations during the manufacturing process. If the diaphragm 36 is slightly misaligned with respect to the housing 12 during assembly, the diaphragm opening 46 may overlap one or more of the slits 17. This misalignment will cause the valve 40 to be bypassed when the valve 40 is closed, *i.e.,* water will flow through the valve 40 even though it is in a closed position.

Accordingly, the first inlet 16 preferably includes a predetermined first inlet geometry that avoids this problem. More specifically, the first inlet 16 is made of a plurality of narrow slits 17 that are arranged in a circular pattern and that are spaced relatively circumferentially distant from the valve 40. This orientation provides additional tolerance for the misalignment of the first inlet 16 and the valve 40 that may result during assembly of the drip emitter 10. This arrangement also provides a relatively large sealing surface for the valve 40, as explained further below. Thus, even if there is some misalignment of the upper housing 30 and the diaphragm 36 in any direction, the valve 40 will not be bypassed, *i.e.,* water will not flow through the valve 40 when it is in the closed position, because it cannot reach the slits 17 to be overlapped with any one of them.

The slits 17 are preferably sized so as to provide a total cross-sectional area sufficient to allow fluid to flow into the first inlet 16 to cause the valve 40 to open at a predetermined pressure. The slits 17 are relatively small and shaped to prevent clogging of the emitter 10. For example, the preferred slits 17 are each generally arcuate in shape with a width on the order of about 0.013 inches and a length on the order of about 0.025 to 0.030 inches. In contrast, early designs used three circular holes with each having a 0.025 inch diameter.

Because the slits 17 are configured smaller, however, potential exists for some to clog, at least in part, when the filtering collects a particle. Therefore, it is preferable to include a number of slits 17 (such as eight) having a total cross-sectional area that allows the valve 40 to operate even if some of the slits 17 become blocked, in whole or in part. The combined flow through area of the preferred eight slits is about 0.00327 square inches, which is over two times larger than the area of an earlier design that used three circular holes (having a combined area of about 0.0015 square inches).

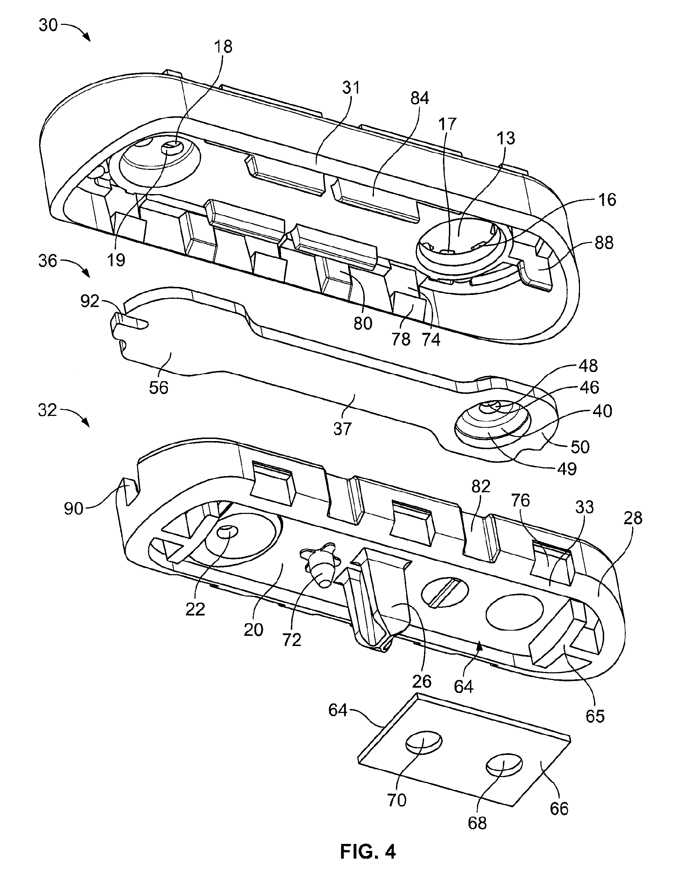

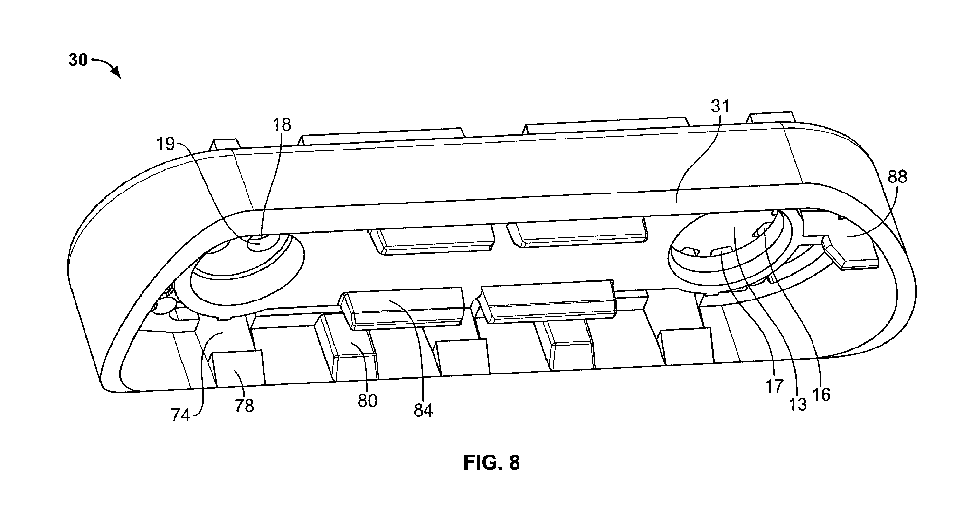

The slits 17 are also preferably arranged circumferentially, or in a ring, in order to maximize their spacing from the center of the flat surface 13 (FIGS. 4, 7, and 8), which acts as a seat for the valve 40 when in the closed position. This flat surface, or valve surface 13, preferably has a generally circular shape with the valve 40 engaging the valve surface 13 near the center and with the slits 17 spaced radially outward on the circumference. Early designs used three circular holes that were located relatively close to the center. It has been determined that these holes were located too close to the intended outer perimeter of the valve surface 13 and, in some instances, the opening 46 in the valve 40 would overlap with one or more of the holes at least in part, and thus, the valve 40 would not completely close. This tends to happen when the upper housing 30 and the diaphragm 36 are misaligned, such as during assembly. The radius from the center to the inner diameter of the slits 17 is preferably on the order of about 0.075 inches, and the valve opening 46 preferably has a radius on the order of 0.0225 inches. Thus, the slits 17 are located well outside of the outer perimeter required for the valve sealing surface such that the valve 40 cannot overlap any of the plurality of slits 17, even where normal manufacturing variations result in misalignment.

The drip emitter 10 also preferably includes a second inlet 18 in the upper housing 30. The second inlet 18 preferably includes two circular inlet holes 19. In contrast to the first inlet 16, water flowing through the second inlet 18 does not flow through the emitter body. Instead, water passes through the circular holes 19 and accumulates in a pressure compensation chamber 62 and presses against the diaphragm 36, as described further below. Fluid flowing into the second inlet 18 accumulates in the interior of the emitter 10, applying pressure to the diaphragm 36 in an amount substantially equivalent to the pressure in the supply tube 100. Because water flowing through the second inlet 18 does not flow through the emitter 10, the holes 19 of the second inlet 18 need not filter the inflowing water and the holes 19 need not be small in cross-section. Indeed, the geometry and arrangement of the inlet holes 19 of the second inlet 18 may be different geometries, as long as the holes 19 are aligned above the chamber 62.

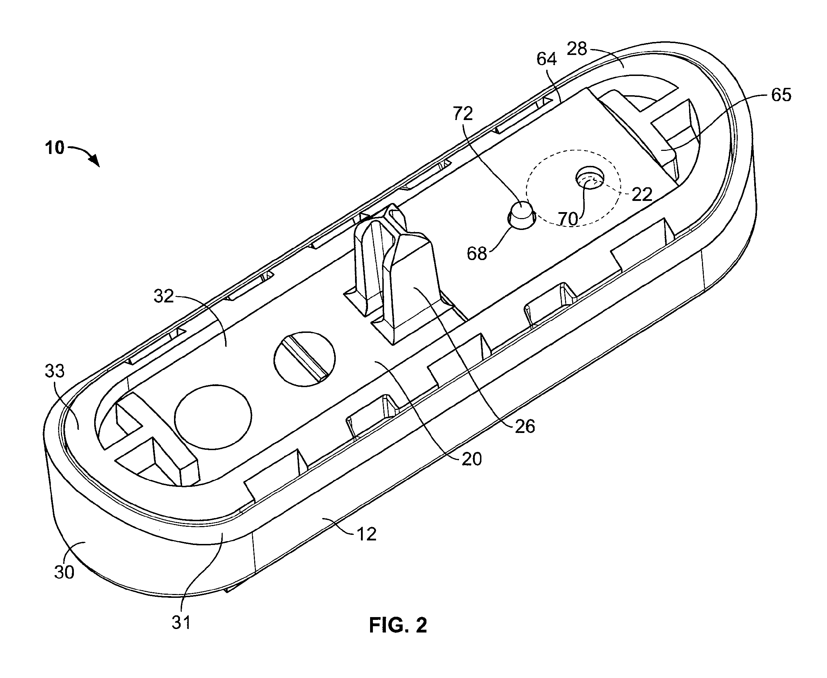

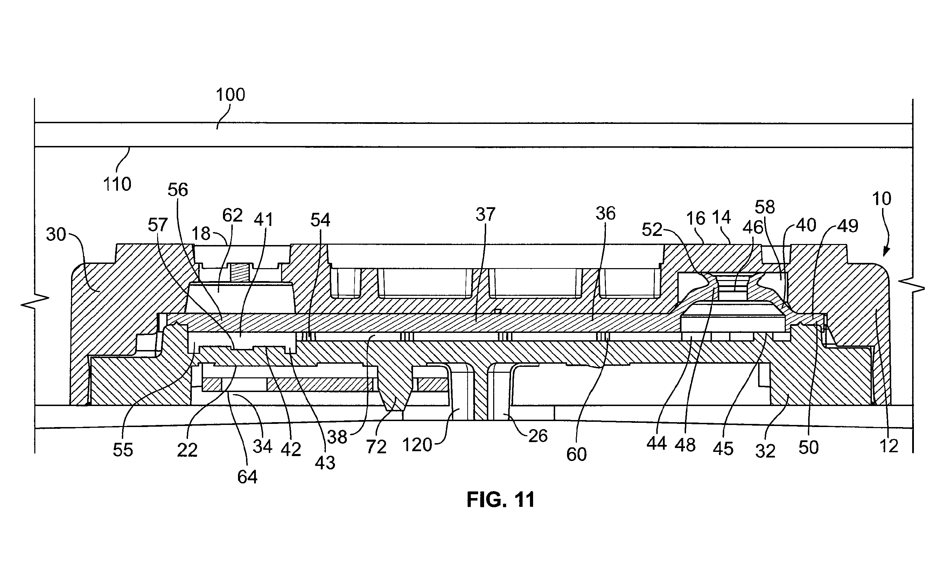

As shown in FIGS. 2 and 11, the lower housing 32 of the emitter 10 defines a base 20 of the emitter 10 that is mounted to the inside surface 110 of the supply tube 100. The lower housing 32 has a raised rim 28 that extends about the perimeter of the base 20. During assembly, the raised rim 28 of each emitter 10 is pressed into sealing engagement with the inside surface 110. When each emitter 10 is mounted, a chamber is formed by the base 20 (inside the raised rim 28) and the inside surface 110 of the supply tube 100. This chamber, or outlet bath 34, forms part of the flow path for fluid flowing through the emitter 10 from inside the supply tube 100 to outside the supply tube 100.

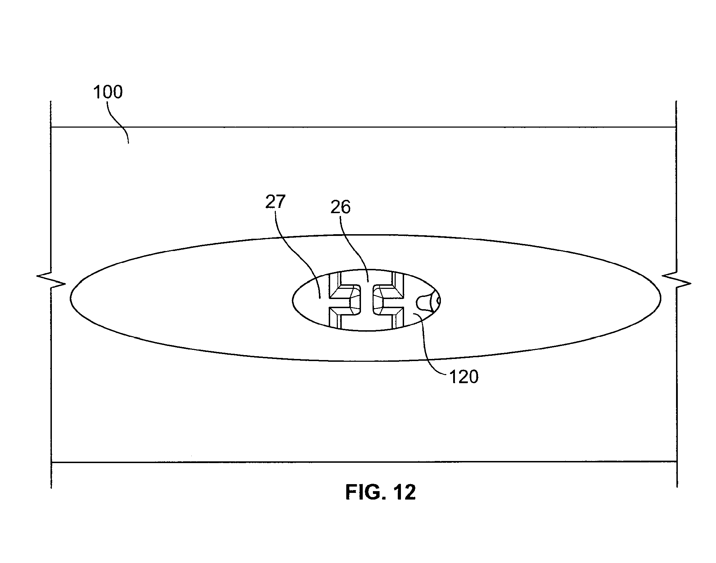

The chimney 26 preferably projects outwardly from the base 20 of the emitter 10. The chimney 26 preferably has an I-shaped cross-section, and the chimney structure is used to create the supply tube outlet 120. More specifically, as the emitter 10 is being mounted to the inside surface 110 of the supply tube 100 during assembly, the chimney 26 pushes against the inside surface 110 and causes it to bulge outwardly, and a cutting tool is used to cut a portion of the chimney 26 to form the supply tube outlet 120. After cutting, the uncut portion of the chimney 26 extends from the base 20 and into the supply tube outlet 120 and defines a portion of the fluid flow path from the inside to the outside of the supply tube 100 (FIG. 12). The cutting operation is performed in a longitudinal direction of the housing 12, *i.e.,* from front to rear of the housing 12 or vice versa, which results in a longitudinally-extending, generally oval-shaped outlet 120 with the orientation shown in FIG. 12.

The orientation of the I-shaped chimney 26 is significant with respect to fluid flow through the emitter 10. Water flows through the emitter outlet 22, flows through outlet bath 34, flows through the "I" of the chimney, and to the surrounding terrain. The chimney 26 preferably has a predetermined orientation with respect to the supply tube outlet 120, as shown in FIG. 12, to facilitate fluid flow through the outlet 120. More specifically, the chimney 26 has an I-shaped cross-section oriented such that the open sections of the "I" face the short ends of the base 20, *i.e.,* the front and the rear of the base 20. The advantage of orienting the chimney 26 in the manner shown is that, when the chimney 26 is cut during assembly, the I-shaped uncut portion forms two large flow openings 27 at the open sections of the "I." Thus, this orientation allows trickle flow through the supply tube outlet 120 and allows for variations in cutting during the assembly process.

In contrast, if the chimney 26 in Figure 12 is rotated 90 degrees such that the open sections of the "I" face the long sides of the supply tube outlet 120 (as in early designs), the flow openings through the outlet 120 may be formed too narrowly. These narrow openings are a result of the assembly process, which results in an elongated cut that forms the supply tube outlet 120. With the chimney 26 in Figure 12 rotated 90 degrees from the orientation shown, the assembly cut results in four smaller openings - two formed by the open sections of the "I" and two formed outside the top and bottom of the "I" - due to the cutting direction. Under this arrangement, if the assembly cut is smaller than intended, one or more of the four narrow openings will be too small and will cause emerging water to be squirted, rather than to drip out of the opening. This squirting is aesthetically unappealing and also may cause the water to be emitted beyond the targeted location.

As shown in FIGS. 3 and 4, the emitter 10 preferably includes four pieces: the upper housing 30, the lower housing 32, the diaphragm 36, and a copper member 64. The upper housing 30 is adapted for assembly with the lower housing 32 (as described further below) to form a substantially enclosed housing interior, which encloses the diaphragm 36. As shown, the diaphragm 36 is preferably a one-piece body extending the length of the housing pieces but multiple, separate diaphragm pieces also may be used. A copper member 64 is preferably mounted to the underside of the lower housing 32 to inhibit the growth of roots or vegetation into the emitter 10.

The upper and lower housings 30 and 32 preferably include attachment features for fastening them to one another. The upper housing 30 and the lower housing 32 snap fit together with each housing portion preferably being separately bonded to the inside of the supply tube 100. These features provide for ease of manufacture, as well as improved strength of bonding of the drip emitter 10 to the supply tube 100. The diaphragm 36 is inserted between the upper and lower housings 30 and 32 prior to the snap fit assembly.

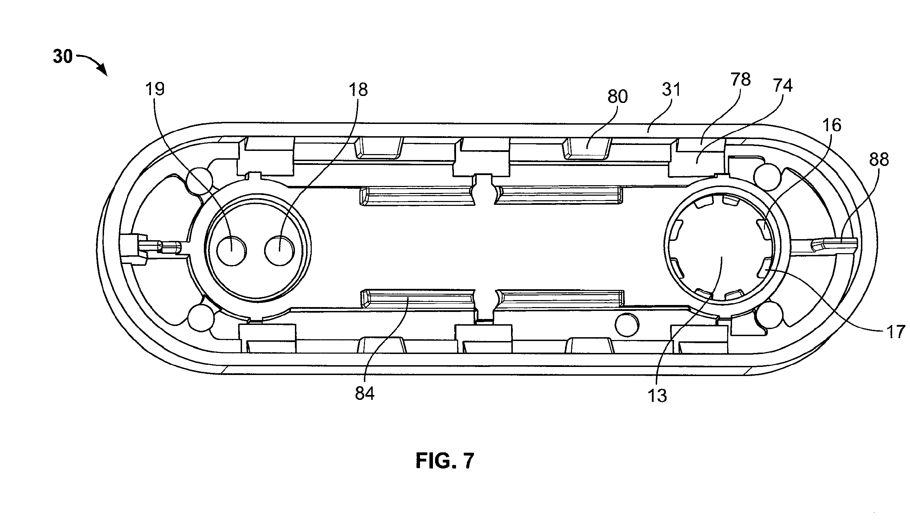

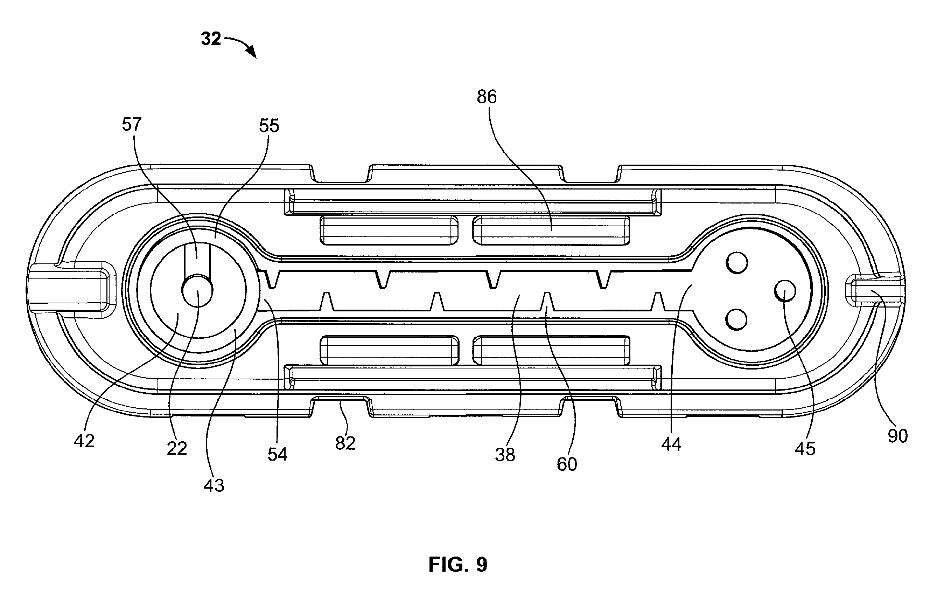

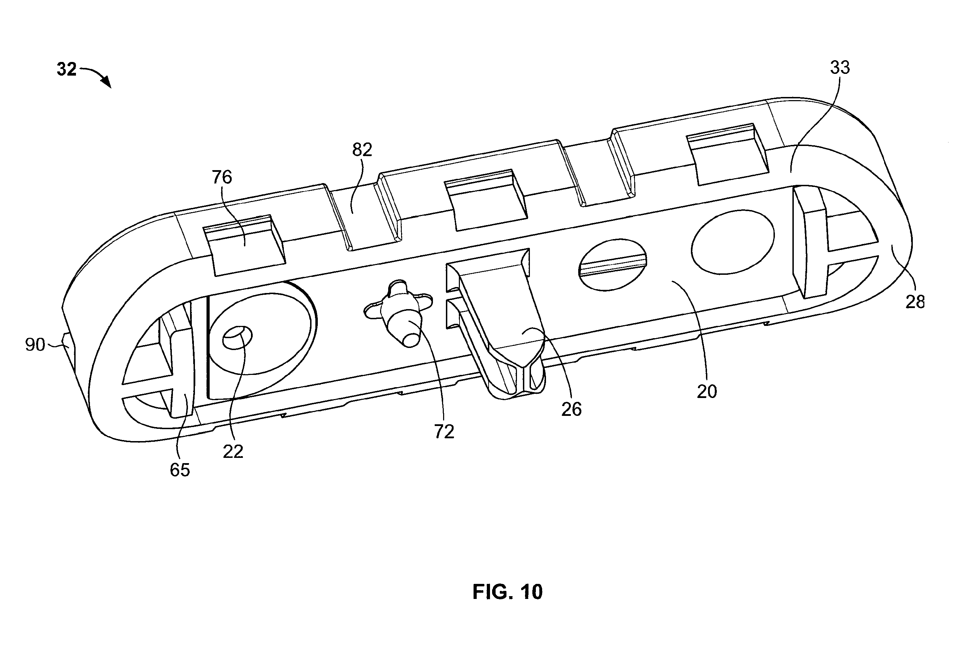

As can be seen in FIGS. 7-10, the upper housing 30 and lower housing 32 have engagement members to fasten the two housing pieces together. The upper housing 30 preferably has projecting barbs 74, preferably three projecting barbs, on each side of the upper housing 30 (FIGS. 7-8). The three barbs 74 have hooked flanges 78 that, after assembly, engage three indented recesses, or pockets 76, formed in the lower housing 32. Each flange 78 extends generally inwardly to snap fit, *i.e.,* interlock, with the corresponding pocket 76 of the lower housing 32 (FIGS. 9 and 10). In addition, the barbs 74 of the upper housing 30 preferably alternate with posts 80, preferably two posts on each side, that slide into two slots 82 formed on each side of the lower housing 32. The four posts 80 are situated between each of the barbs 74 to align the two housing pieces with one another. The snap design reduces cost because it allows faster assembly of the housing than welding the two housing pieces together.

Additional engagement members are preferably included to assist with the alignment and mounting of the two housing pieces and the diaphragm 36. More specifically, the upper housing 30 preferably includes longitudinal tabs 84 that project from the interior of the upper housing 30. These tabs 84 (preferably four) extend in a longitudinal direction and are aligned with four corresponding longitudinal grooves 86 in the lower housing 32. The spacing between tabs 84 to either side of the upper housing 30 corresponds generally to the width of a central strip 37 of the diaphragm 36. Similarly, the spacing between grooves 86 to either side of the lower housing 32 corresponds generally to the width of the central strip 37 of the diaphragm 36. These tabs 84 and grooves 86 are positioned and coordinated with the diaphragm 36 to hold and position the diaphragm 36 and prevent movement in a direction perpendicular to the longitudinal direction.

Additional engagement members are preferably included to orient and prevent movement of the diaphragm 36 in a longitudinal direction. More specifically, the upper housing 30 includes two stops 88 that are received in two recesses 90 of the lower housing 32. The spacing between the stops 88 corresponds generally to the length of the diaphragm 36. The stops 88 are located at each longitudinal end of the upper housing 30, and the recesses 90 are located at each corresponding longitudinal end of the lower housing 32. The diaphragm 36 preferably includes a slot 92 at one end of the diaphragm 36 that is sized for sliding reception with one of the two stops 88. The diaphragm 36 is thus held generally fixed between the two stops 88.

Another aspect of the emitter 10 is the welding of both housing portions 30 and 32 to the inside of the tube 100. The lower housing 32 is welded to the tube 100 at the engagement surface formed by the raised rim 28. In addition to the lower housing 32, the upper housing 30 is also welded to the tube 100. More specifically, as can be seen in FIGS. 2, 4, 8, and 10, the upper housing 30 and the lower housing 32 each have inclined or curved surfaces 31 and 33, respectively, that allow for welding of both housing portions to the inner curvature of the tube 100. These inclined surfaces 31 and 33 preferably have a radius of curvature similar to that of the inside surface 110 of the tube 100. By welding both housing portions to the tube 100, the emitter 10 is more securely fixed to the inside of the tube 100 than if just one housing portion were so welded. This secure mounting resists detachment of the emitter 10 and reduces the potential for the housing components to become separated, such as may occur, for example, if the tube 100 becomes twisted. In addition to being more securely mounted, the emitter 10 is more completely sealed to the tube 100, thereby preventing bypass flow around the emitter 10, *i.e.,* fluid flowing from the supply tube 100 directly to the supply tube outlet 120 without flowing through the emitter 10.

The flexible diaphragm 36 is preferably a silicone or rubber membrane extending between the housing portions. As shown in FIGS. 3-4, the diaphragm 36 is dimensioned to overlap and seal against the pressure-reducing flow channel 38 and the water metering surface 42 of the lower housing 32. The diaphragm 36 has a first end 50 located beneath, and in flow communication with, the first inlet 16. The first end 50 defines the valve 40, which regulates flow from the first inlet 16 to the pressure-reducing flow channel 38, as described below. The first end 50 of the diaphragm 36 extends into the central, elongated strip 37, which overlays and sealingly engages the pressure-reducing flow channel 38. In turn, the central strip 37 extends into a second end 56 of the diaphragm 36, which is located beneath, and is in fluid communication with, the second inlet 18. The second end 56 overlaps and sealingly engages the water metering surface 42 of the lower housing 32.

As shown in FIG. 9, the lower housing 32 includes an inlet end 44, the pressure-reducing flow channel 38, and the water metering surface 42, which are formed on the interior side of the lower housing 32. Water flows in the flow path defined by the interior side of the lower housing 32 and the overlaying diaphragm 36. More specifically, water enters the inlet end 44, flows through the pressure-reducing flow channel 38, and flows through the water metering surface 42 to the emitter outlet 22.

The pressure-reducing flow channel 38 preferably includes a number of alternating, flow diverting baffles 60 projecting partially into the flow channel 38 and causing frequent, regular, and repeated directional changes in water flow. Accordingly, the water flow takes on a back and forth zigzag pattern. The pressure-reducing flow channel 38 causes a relatively significant reduction in water pressure. In contrast, the water metering surface 42 is responsive to differences in water pressure in the irrigation tube 100 to cause a more subtle reduction in pressure.

With reference to FIGS. 3, 5, and 11, the valve 40 is preferably a check valve, or other one-way directional valve, and is positioned between the first inlet 16 and the inlet end 44 of the pressure-reducing flow channel 38. The valve 40 opens and permits water flow between the first inlet 16 and the emitter outlet 22 when the supply water pressure is above a predetermined minimum level, such as 5 psi. The valve 40, however, closes off the flow path through the emitter 10 when the water pressure falls below the predetermined minimum level, as may occur when an irrigation cycle is completed. Closing the flow path through the emitter 10 prevents the water in the irrigation supply tube 100 from slowly draining to the outside through the emitter 10 and prevents backflow from entering the tube 100 from the emitter 10. Closing the flow path also prevents back siphoning into the emitter 10, *i.e.,* closing the flow path prevents dirt and debris from outside terrain from entering and clogging the emitter 10.

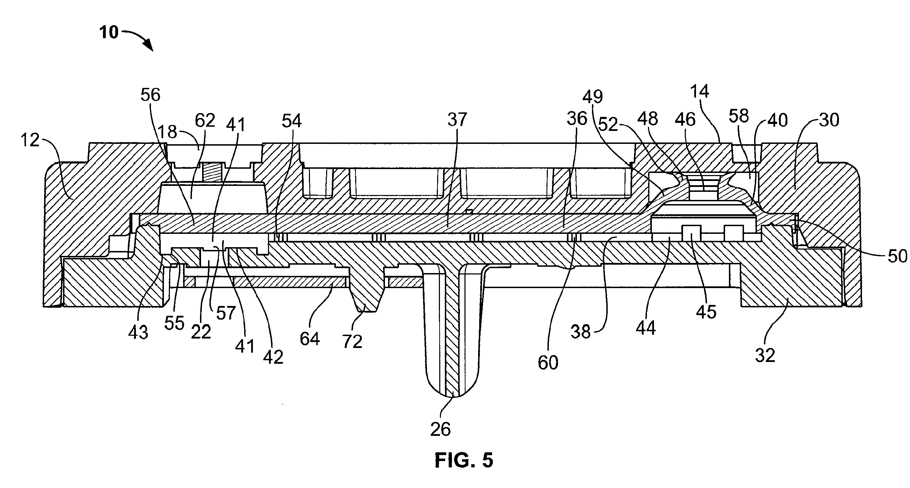

As shown in FIGS. 3 and 5, the valve 40 includes a tubular or cylindrical portion *i.e.,* a boss 48, of the diaphragm 36 seated on top of a substantially conical frustum portion 49 of the diaphragm 36. The boss 48 is spaced downstream of the first inlet 16 and is hollow, defining a hole 46 in the diaphragm 36. The boss 48 sealingly engages the upper housing 30 to block the flow path through the emitter 10 and disengages from the upper housing 30 to open the flow path and allow water to flow into the inlet end 44 and pressure-reducing flow channel 38.

Another feature of the emitter 10 is proper alignment and sealing engagement of the boss 48 with the housing interior. Early designs used a projecting disk, or protrusion, on the housing interior to aid in alignment with a valve. It has been found, however, that this protrusion is sensitive to misalignment of the upper housing and diaphragm during assembly. More specifically, if the valve 40 is slightly off center such that it is not generally aligned with the protrusion on the housing 12, an uneven seal results that causes leaks at low pressure. Accordingly, the emitter 10 includes a boss 48 that preferably seals against the flat surface 13 on the interior of the upper housing 30, as described above. The flat surface 13 preferably has a circular polish to create a good sealing engagement with the boss 48.

During operation, water flowing through the emitter 10 presses down on the pressure-sensitive and substantially conical frustum portion, or snap button 49, which, in turn, if the water pressure exceeds the predetermined minimum level, flexes, or "snaps down," causing the upper end 52 of the boss 48 to disengage from its sealing engagement with the upper housing 30 and thereby opening the flow path through the diaphragm hole 46. If the water pressure does not exceed the predetermined level, the snap button 49 does not snap down, the upper end 42 of the boss 48 remains engaged to upper housing 30, and the flow path through the diaphragm hole 46 remains obstructed. Thus, the snap button 49 operates between two positions - a raised position, in which the boss 48 is sealingly engaged to the upper housing 30, and a lowered position, in which the boss 48 is disengaged from the upper housing 30.

Another aspect of the emitter 10 is the proper operation of the valve 40, *i.e.,* that it remain open when the pressure is above the predetermined pressure and that it remain closed when the pressure is below the predetermined pressure. Early designs used an uneven, asymmetric rib formed on the lower housing and positioned underneath the valve to prevent the valve from being jammed in an open position. The emitter 10 uses three equally-spaced pins 45 (FIGS. 3 and 9) to provide a more symmetric arrangement and to prevent jamming of the valve 40. These pins 45 support the valve 40 evenly, thereby preventing inversion of the valve 40 and preventing it from becoming fixed in the open position.

The symmetric arrangement of the pins 45 (resulting in even support of the valve 40) ensures that the valve 40 remains aligned parallel to the valve surface 13 throughout its upward and downward travel. In contrast, it has been found that an asymmetric arrangement of pins 45 may result in non-parallel alignment and a crooked engagement between valve 40 and valve surface 13. As a result, the valve 40 may not seal until a pressure lower than intended because the valve 40 is forced to realign itself to engage the valve surface 13 in a parallel manner. Accordingly, the symmetric arrangement of the pins 45 allows the valve 40 to more consistently form a seal at the desired pressure.

The relative heights of the diaphragm 36, inlet chamber 58, and pins 45 are selected to prevent this inversion and jamming of the valve 40 by setting a maximum distance that the top of the valve 40 may move away from the valve seat 13. For example, the preferred pins 45 are each about 0.040 inches in height, the preferred diaphragm 36 is about 0.095 inches in height, and the preferred inlet chamber 58 is about 0.049 inches in height. When assembled as shown in Figure 5, the relative heights of the pins 45, the diaphragm 36, and the inlet chamber 58 allow the valve 40 to be spaced away from the valve surface 13 by a preferable maximum distance of about 0.019 inches when the valve 40 opens. Different relative heights may allow the valve 40 to become stuck open (*e.g.,* if the pins 45 are too short) or may prevent the valve 40 from being sufficiently open (e.g., if the pins 45 are too tall). Thus, there must be a coordinated balance between the pins 45 and the desired flow opening.

During operation, water flowing through the irrigation tube 100 enters the emitter 10 through the first inlet 16. It then enters a first inlet chamber 58 defined, at least in part, by a portion of the upper housing 30, the boss 48, and the snap button 49. The boss 48 initially is in sealing engagement with a portion of the upper housing 30 to block the flow channel through the diaphragm opening 46. If the pressure of water flowing into the first chamber 58 and impacting the snap button 49 is below a predetermined minimum level, the boss 48 remains in sealing engagement with the upper housing 30, which, in effect, acts as a valve seat. If, however, the pressure of water flowing into the first chamber 58 and impacting the snap button 49 is above the minimum level, the upper end 52 of the boss 48 disengages from the upper housing 30, thereby opening the flow channel through the diaphragm opening 46.

Water then flows through the opening 46 in the diaphragm 36 to the inlet end 44 of the pressure-reducing flow channel 38. The water then experiences multiple directional changes as it is constantly redirected by the flow-diverting baffles 60 defining the pressure-reducing flow channel 38. This repeated redirection significantly reduces the water pressure and water flow by the time the water reaches the outlet end 54 of the pressure-reducing flow channel 38. The water then flows through a water metering chamber 41, as described further below. Next, the water proceeds through the emitter outlet 22, through the outlet bath 34 (defined by the region between the base 20 and the inside surface 110 of the irrigation tube 100), and out through the supply tube outlet 120. The water exits through the supply tube outlet 120 to the terrain and vegetation outside the tube 100. Once an irrigation cycle is complete, or if the water pressure in the irrigation tube 100 otherwise falls below the predetermined minimum level, the boss 48 in the diaphragm 36 returns to its relaxed state, closing the valve 40 and creating a seal to prevent drainage and back siphoning into the emitter 10.

The water metering surface 42 is shown in FIGS. 3 and 9. The water metering surface 42 is formed in the lower housing 32 and is generally circular in shape when viewed from the upper housing 30. It is located downstream of the outlet end 54 of the pressure-reducing flow channel 38 and is upstream of the emitter outlet 22. The water metering surface 42 includes a groove 43 formed therein for regulating water flow to the emitter outlet 22.

The water metering surface 42 is part of a pressure compensation mechanism for the emitter 10. Water initially flows through the second inlet 18 and accumulates in a pressure compensation chamber 62 (FIG. 5). The chamber 62 is defined by the upper housing 30 and the second end 56 of the flexible diaphragm 36 that overlays the water metering surface 42. Water flowing into the pressure compensation chamber 62 accumulates in the chamber and does not flow through the rest of the emitter 10. In other words, the pressure compensation chamber 62 is sealed from the rest of the emitter 10. As the water accumulates, the water in the chamber 62 changes pressure with the pressure of the water supply in the conduit 100 and presses down, accordingly, against the second end 56 of the flexible diaphragm 36, thereby flexing and deflecting the diaphragm 36 toward the water metering surface 42.

The water metering surface 42 and the overlaying diaphragm 36 form a water metering chamber 41, located beneath the pressure compensation chamber 62. During operation of the emitter 10, water pressure in the pressure compensation chamber 62 causes the diaphragm 36 to flex between a fully relaxed position and a fully distended position, changing the size of the water metering chamber 41. In turn, this change in size of chamber 41 regulates water flow. More specifically, when the diaphragm 36 is in a fully relaxed position, the water metering chamber 41 is relatively large in size, allowing a relatively large fluid flow through the chamber 41. In contrast, when the diaphragm 36 is fully distended, the water metering chamber 41 is relatively small in size, allowing a relatively small fluid flow through the chamber 41. Thus, fluid flow through the water metering chamber 41 is reduced in general proportion to the amount of pressure exerted against the second end 56 of the diaphragm 36.

Further, the water metering surface 42 includes a groove 43 for regulating fluid flow. As shown in FIGS. 3, 5, and 9, the groove 43 has a recessed annular portion 55 that extends about the circumference of the water metering surface 42 and a recessed radial portion 57 connecting a point along the annular portion 55 to the emitter outlet 22. When the diaphragm 36 is fully distended by relatively high pressure, it is deflected into and presses against the water metering surface 42. The groove 43 provides a flow path along the depressed annular portion 55 to the depressed radial portion 57 and out through the emitter outlet 22. The groove 43 allows output flow even at relatively high water pressure, such that deflection of the diaphragm 36 does not completely obstruct fluid flow through the water metering chamber 41. Thus, the diaphragm 36, water metering chamber 41, water metering surface 42, and groove 43 act as a pressure-dependent mechanism to offset differences in water pressure in the irrigation tube 100 to maintain the flow rate through the emitter 10 at a relatively constant level.

The use of the flexible diaphragm 36 and the groove 43 also permit the flushing of debris and grit out of the emitter 10. If grit or debris becomes lodged in the flow channel of the groove 43, water pressure in the groove will increase. As the pressure in the groove 43 increases and becomes more similar to the pressure in the supply tube 100, the flexibility of the diaphragm 36 allows it to be pushed upward, thereby dislodging the debris.

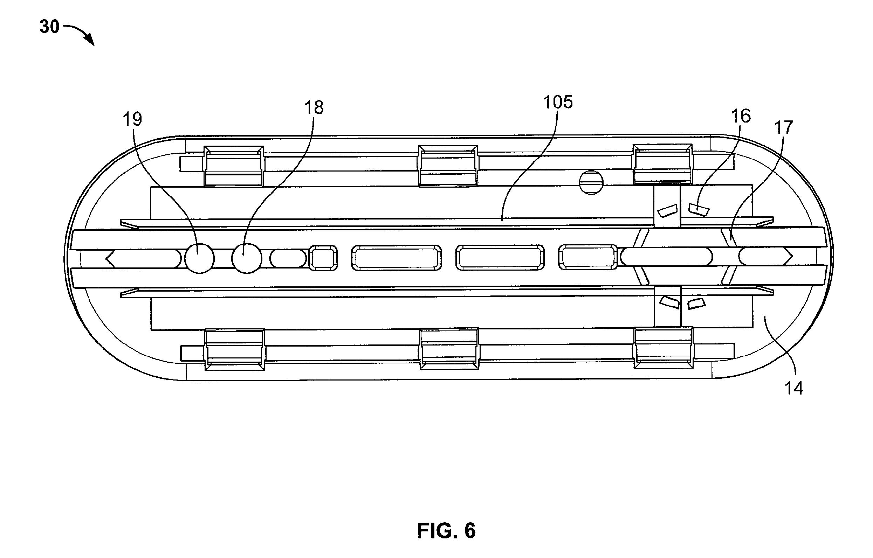

In addition, as shown in FIGS. 1, 3, and 6, the upper housing 30 preferably includes features to assist in mounting the emitter 10. More specifically, the upper housing 30 preferably includes two guide ribs 105 for mounting each emitter 10 to the inside wall 110 of the supply tube 100. As shown, these guide ribs 105 project from the upper housing 30 and preferably extend longitudinally near the center of the upper housing 30, although other orientations and arrangements of guide ribs may be used. During assembly, each emitter 10 is mounted to the inside wall 110 of tube 100, as shown in FIG. 11. More specifically, an insertion device (not shown) presses against the upper housing 30 of each emitter 10 such that the lower housing 32 of the emitter 10 engages the inside wall 110. The guide ribs 105 provide stability and maintain proper orientation of the emitter 10 during mounting of the emitter 10 by engaging corresponding ribs of the insertion device.

As shown in FIGS. 3-5, a copper member 64 is preferably used at the emitter outlet 22 to prevent plant root intrusion. Fluid flowing through the emitter outlet 22 transports copper ions to the outlet bath 34, to the supply tube outlet 120, and to terrain immediately surrounding the supply tube outlet 120. These copper ions discourage plant roots from entering the supply tube outlet 120.

Use of copper is effective because, although copper is a required nutrient for plant growth, excessive amounts of copper inhibit root cell elongation. When a plant root comes into contact with high concentrations of copper ions, the surface of the root is damaged, the root hairs die off, and the overall growth of the root is stunted. The copper, however, does not cause any serious damage to the plant itself. Because the copper remains in the plant's root tissue, it only inhibits growth of the roots in close proximity to the copper and does not affect the overall health of the plant. The amount of copper that is taken up by fluid flowing through the emitter 10 is infinitesimal, and therefore, the life of the copper member 64 is extremely long.

One cost effective form of a copper member 64, shown in FIGS. 3-5, is a thin rectangular copper plate 66 having two holes 68 and 70 therethrough. The first hole 68 is preferably dimensioned to receive a locator peg 72 protruding from the base 20 of the emitter 10 to provide a mounting for the plate 66, and the copper plate 66 is preferably heat staked to the peg 72. The two holes 68 and 70 on the plate 66 are spaced such that, when the first hole 68 is positioned over the locator peg 72, the second hole 70 is situated over the emitter outlet 22. Alternatively, the copper plate 66 may be mounted to the base 20 of the emitter 10 in various ways, *i.e.,* the copper plate 66 can be compression fitted, glued, co-molded, or otherwise mounted to the base 20. Alternatively, part or all of the base 20 may be flashed with a thin protective copper layer about the emitter outlet 22. As should be evident, the copper member 64 may take on any of various other forms besides the copper plate 66.

Two T-shaped mounts 65 located at the ends of the base 20 also are preferably used in mounting the base 20 to the inner surface 110 of the irrigation tube 100. The T-shaped mounts 65 assist in securing the emitter 10 to the irrigation tube 100 and provide additional mounting support for the raised rim 28. The T-shaped mounts 65 also provide structural integrity to the emitter 10 for resisting forces exerted by water flowing in the irrigation tube 100 and forces exerted when a chimney 26 is used to create an opening in the tube wall 110. The T-shaped mounts 65 also may be used to provide support for the copper member 64. Although the mounts 65 are shown in FIG. 10 as T-shaped, it should be evident that the mounts may have various other shapes, such as circular or L-shaped, that may be used in other embodiments for mounting the emitter 10 to the inner surface 110 of the irrigation tube 100.

The preferred material for the member 64 consists of entirely, or almost entirely, copper. Copper alloy, including alloy containing 50% or more copper, may also be used to inhibit root intrusion. Alternatively, the member 64 may include non-copper and copper potions, such as a plastic core surrounded completely or in part by an outer copper layer. Further, as should be evident, the geometry, dimensions, and arrangement of such copper members 64 may vary depending on the specific shape and size of the drip emitter and its outlet and is not limited to the geometry of the embodiments shown in FIGS. 3-5.

One significant advantage of the copper member 64 is that the emitter outlets 22 are easily locatable for subsurface applications. Subsurface drip emitters, made of plastic, silicone, and rubber components, and buried underground, are generally not readily locatable from above ground. By using copper at the emitter outlet 22 of each emitter 10, a metal detector can be used to easily locate the exact position of emitter outlets 22 in the drip irrigation tube 100 despite the fact that the tube 100 and emitters 10 are buried.

Moreover, copper installed in each emitter 10 can be located with a metal detector so that irrigation tubes 100 and emitters 10 can be easily located years after the system is installed. For example, this feature helps easily locate irrigation tubes 100 underground to prevent tube puncture that may result from the installation of aeration equipment, tent stakes, signs, etc. This feature also helps easily locate irrigation tubes 100 and emitters 10 underground to accomplish maintenance practices on the tubes 100 and emitters 10, such as replacing pieces of tubing, changing the layout of the irrigation system, and replacing old emitters with new emitters having different flow rates.

An additional advantage provided by the copper member 64 is that the protection against intruding plant roots is not affected by non-level terrain or relative orientation of the drip emitter 10. Chemicals used to prevent intruding roots may run off or otherwise become distributed unevenly where the terrain is not level or where the emitter 10 is oriented in a certain manner. In contrast, the emitter 10 is protected by the copper member 64, which is affixed directly thereto, and such protection is not affected by the unevenness of the terrain or the orientation of the emitter 10.

Another significant advantage provided by the copper member 64 is that it does not seriously harm plants or detrimentally impact the environment. The copper taken up by a plant root has a localized effect on the root and does not harm the entire plant. Further, the above embodiments do not rely on the use of an herbicide to protect against plant root intrusion, which may have a significant and detrimental plant and environmental impact. Instead, the above embodiments prevent root intrusion in an environmentally friendly manner.

Another advantage provided by the copper member 64 is that it does not require user intervention to inhibit root growth. Solutions that use chemical treatments often require the chemical to be added to the irrigation system seasonally. User training is required to ensure the user understands that chemicals are required, and the user must remember to reapply the chemicals at regular intervals. The copper member 64 avoids these problems because it is built-in to the product.

Accordingly, one aspect addressed herein is an irrigation drip emitter 10 comprising: a housing 12 including a first housing portion 30 and a second housing portion 32, the first housing portion 30 defining an inlet 16 and the second housing portion 32 defining a pressure reducing flow channel 38 and a first outlet 22; a diaphragm 36 mounted between the first housing portion 30 and the second housing portion 32 and forming in part a valve 40 having an open position and a closed position; and a first flow path from the inlet 16 through the valve 40 when in the open position, through the pressure reducing flow channel 38, and through the first outlet 22; wherein the first housing portion 30 comprises a valve surface 13 that is engaged by the valve 40 when in the closed position and wherein the inlet 16 comprises one or more inlet openings 17 spaced substantially outside an outer perimeter of the valve surface 13 such that the valve 40 cannot overlap with the plurality of openings 17.

Further, the one or more inlet openings 17 may comprise a plurality of inlet openings sized to filter particulate matter exceeding a predetermined size from entering the drip emitter 10. Also, the inlet openings 17 may be elongated inlet openings, arcuate, and/or disposed in a ring.

In addition, the valve 40 of the irrigation drip emitter 10 may comprise a first portion 49 responsive to pressure to activate the valve 40 between the open position and the closed position and a second portion 48 defining an opening 46 in the diaphragm 36, the second portion 48 engaging the valve surface 13 to provide an even seal when in the closed position when fluid pressure is below a predetermined level. The first portion 49 may comprise an annular portion extending outward beyond the second portion 48 and the second portion 48 comprises a tubular portion. Further, the second housing portion 32 may define a plurality of pins 45 aligned with the diaphragm valve 40, the plurality of pins 45 spaced to evenly support the valve 40 when in the open position and to prevent the valve 40 from becoming fixed in the open position.

The irrigation drip emitter 10 may comprise copper located downstream of the first outlet 22. The copper may be in the form of a copper member 64 mounted to the second housing portion. Also, the copper may be in the form of a copper layer applied to the second housing portion 32. Further, the copper may be located in a chamber 34 defined at least in part by the second housing portion 32, the chamber 34 forming a copper ion bath for fluid flowing along the first flow path.

In another aspect, the irrigation drip emitter 10 comprises: a housing 12 including a first housing portion 30 and a second housing portion 32, the first housing portion 30 defining an inlet 16 and the second housing portion 32 defining a pressure reducing flow channel 38 and a first outlet 22; a diaphragm 36 mounted between the first housing portion 30 and the second housing portion 32 and forming in part a valve 40 having an open position and a closed position; a first flow path from the inlet 16 through the valve 40 when in the open position, through the pressure reducing flow channel 38, and through the first outlet 22; and wherein the first and second housing portions 30 and 32 include a plurality of spaced interlocking engagement members for alignment and mounting of the first housing portion 30 to the second housing portion 32 to resist detachment of the first housing portion 30 from the second housing portion 32.

In this aspect, the engagement members may comprise one or more barbs 74 formed in one of the housing portions that engage one or more pockets 76 formed in the other of the housing portions for snap fit engagement of the first housing portion 30 to the second housing portion 32. Also, the engagement members may comprise one or more posts 80 formed in one of the housing portions that engage one or more slots 82 formed in the other of the housing portions for alignment of the first and second housing portions 30 and 32. Further, the one or more barbs 74 and posts 80 may be spaced at predetermined intervals along the first housing portion 30 and wherein the one or more barbs 74 alternate with the one or more posts 80.

The preferred embodiments also include methods of assembling the drip emitter 10 and of mounting the drip emitter 10 to the inside surface 110 of a supply tube 100. The method of assembly generally involves assembling the upper housing 30, lower housing 32, and diaphragm 36. The method preferably includes forming a plurality of barbs 74 on the upper housing 30 at predetermined intervals, forming a plurality of pockets 76 on the lower housing 32 at the predetermined intervals, inserting the diaphragm 36 between the upper housing 30 and lower housing 32, and interlocking each barb 74 with the corresponding pocket 76. The method of assembly may further include forming a plurality of tabs 84 on the upper housing 30 to define a predetermined distance between the tabs 84 corresponding to a width of the diaphragm 36, forming a plurality of grooves 86 on the lower housing for reception of the plurality of tabs 84, inserting the diaphragm 36 between the plurality of tabs 84 to limit movement of the diaphragm 36 in the transverse direction and to align the diaphragm 36 with the upper and lower housings 30 and 32, and inserting each tab 84 into the corresponding groove 86. The method may further include forming a plurality of stops 88 in the upper housing 30 to define a predetermined distance between the stops 88 corresponding to a length of the diaphragm 36, forming a plurality of recesses 90 in the lower housing for reception of the stops 88, locating the diaphragm 36 between the plurality of stops 88 to limit movement of the diaphragm 36 in the longitudinal direction and to align the diaphragm 36 with the upper and lower housing 30 and 32, and inserting each stop 88 into the corresponding recess 90.

In another aspect, a method of assembling an irrigation drip emitter 10, the emitter 10 having a first housing portion 30, a second housing portion 32, and a diaphragm 36, comprises: forming one or more tabs 84 in one of the housing portions to define a first predetermined distance corresponding to a first dimension of the diaphragm 36; forming one or more stops 88 in one of the housing portions to define a second predetermined distance corresponding to a second dimension of the diaphragm 36; locating the diaphragm 36 to engage the one or more tabs 84 to limit movement of the diaphragm 36 in a first direction and to align the diaphragm 36 with the first and second housing portions 30 and 32; and locating the diaphragm 36 to engage the one or more stops 88 to limit movement of the diaphragm 36 in a second direction transverse to the first direction and to align the diaphragm 36 with the first and second housing portions 30 and 32. The method may further comprise: forming a plurality of barbs 74 in one of the housing portions at predetermined intervals; forming a plurality of pockets 76 in the other of the housing portions at the predetermined intervals, each pocket 76 configured for reception of one barb 74; locating the diaphragm 36 between the first and second housing portions 30 and 32; and interlocking each barb 74 with the corresponding pocket 76. The method may also comprise applying copper to at least a portion of the emitter.

The method of mounting the drip emitter 10 generally involves the formation of a continuous drip irrigation tube 100 with internally-spaced discrete emitters 10, which are inserted into the tube 100 during extrusion. As the emitters 10 are inserted into the tube 100 during extrusion, they are heat bonded to the inside surface 110 of the tube 100. The emitters 10 are fed into the tube 100 such that the longitudinal dimension of each emitter 10 is aligned with the direction of extrusion. The projection, or chimney 26, preferably has an I-shaped cross-section with the "I" oriented transverse to the longitudinal dimension of the emitter 10, *i.e.,* the top and bottom portions of the "I" are generally parallel to the longitudinal dimension of the emitter 10. Each emitter 10 is inserted such that the chimney 26 engages the tube 100 causing a bulge to form in the tube 100. The bulges pass under a stationary cutter that blindly cuts each bulge and chimney 26 forming a supply tube outlet 120 with two openings 27, one on the forward side and the other on the rearward side (rather than four smaller openings). The emitters 10 may be mounted to the inside surface 110 of the tube 100 at predetermined intervals.

The foregoing relates to preferred exemplary embodiments of the invention. It is understood that other embodiments and variants are possible which lie within the spirit and scope of the invention as set forth in the following claims.

## Claims

1. An irrigation drip emitter comprising:
a housing including a first housing portion and a second housing portion, the first housing portion defining an inlet and the second housing portion defining a pressure reducing flow channel and a first outlet;
a diaphragm mounted between the first housing portion and the second housing portion and forming in part a valve having an open position and a closed position; and
a first flow path from the inlet through the valve when in the open position, through the pressure reducing flow channel, and through the first outlet; and
wherein at least one of the first and second housing portions includes one or more members for substantially fixed alignment of the diaphragm to limit movement of the diaphragm.

2. The irrigation drip emitter of claim 1 further comprising one or more tabs formed in one of the housing portions to define a predetermined distance corresponding to a width of the diaphragm, the one or more tabs aligning the diaphragm to resist movement of the diaphragm in at least a first direction.

3. The irrigation drip emitter of claim 2 further comprising one or more stops formed on one of the housing portions to define a predetermined distance corresponding to a length of the diaphragm, the one or more stops aligning the diaphragm to resist movement of the diaphragm in at least a direction perpendicular to the first direction.

4. The irrigation drip emitter of any of the preceding claims wherein the first housing portion has a first curved surface and the second housing portion has a second curved surface, the first and second curved surfaces having substantially the same radius of curvature for mounting the first and second housing portions to an inside wall of a supply tube.

5. The irrigation drip emitter of any of the preceding claims further comprising a post projecting from the second housing portion and adapted for engagement with an inside wall of a supply tube to form a second outlet.

6. The irrigation drip emitter of claim 5 wherein the post has an I-shaped cross-section that is oriented transverse to a longitudinal dimension of the drip emitter to define at least in part two outlet openings of the second outlet.

7. The irrigation drip emitter of any of the preceding claims further comprising a second flow path into a pressure compensation chamber defined by the first housing portion and the diaphragm.

8. The irrigation drip emitter of claim 7 further comprising a metering chamber defined by the second housing portion and the diaphragm, wherein the diaphragm is deflected into the metering chamber in response to pressure exerted against the diaphragm by fluid flowing into the pressure compensation chamber.

9. The irrigation drip emitter of claim 8 wherein the second housing portion includes a grooved surface that defines a portion of the metering chamber and wherein the diaphragm is deflected toward the grooved surface to regulate fluid flowing through the first outlet in response to fluid pressure in the pressure compensation chamber.

10. The irrigation drip emitter of any of the preceding claims wherein the pressure reducing flow channel comprises a plurality of baffles to cause directional changes in fluid flow.

11. The irrigation drip emitter of any of the preceding claims further comprising copper located downstream of the first outlet.

12. The irrigation drip emitter of claim 11 wherein the copper is in the form of a copper member mounted to the second housing portion or a copper layer applied to the second housing portion.

13. The irrigation drip emitter of claims 11 or 12 wherein the copper is located in a chamber defined at least in part by the second housing portion, the chamber forming a copper ion bath for fluid flowing along the first flow path.

14. A method of assembling an irrigation drip emitter, the emitter having a first housing portion, a second housing portion, and a diaphragm, the method comprising:
forming one or more tabs in one of the housing portions to define a first predetermined distance corresponding to a first dimension of the diaphragm;
forming one or more stops in one of the housing portions to define a second predetermined distance corresponding to a second dimension of the diaphragm;
locating the diaphragm to engage the one or more tabs to limit movement of the diaphragm in a first direction and to align the diaphragm with the first and second housing portions; and
locating the diaphragm to engage the one or more stops to limit movement of the diaphragm in a second direction transverse to the first direction and to align the diaphragm with the first and second housing portions.

15. The method of claim 14 further comprising applying copper to at least a portion of the emitter.
